# EUROPÄISCHE PATENTANMELDUNG

(11) **EP 3 824 864 A1**
(43) Veröffentlichungstag der Anmeldung: **26.05.2021**
(21) Anmeldenummer: 19000523.1
(22) Anmeldetag: 19.11.2019
(51) Int. Cl.: A61J 1/20, C02F 1/76, A61J 1/03, B32B 1/00

(54) **MEHRKAMMERBEHÄLTER**

(71) Anmelder: Rupprecht, Holger, 79183 Waldkirch (DE); Wenske, Udo, 44532 Lünen (DE)
(72) Erfinder: Rupprecht, Holger, 79183 Waldkirch (DE); Wenske, Udo, 44532 Lünen (DE)
(74) Vertreter: Fischer, Michael

(57) **Zusammenfassung**

Mittel zum Vorbereiten einer oralen Rehydrierungslösung in Situationen, in denen kein sicheres Trinkwasser verfügbar ist. Der Mehrkammerbehälter vermeidet den Zyklus der Neuinfektion durch in kontaminiertem Wasser vorhandene Krankheitserreger.

Mehrkammerbehälter (10) zur Aufnahme, Lagerung und Bereitstellung von Komponenten einer festen oralen Rehydratisierungszusammensetzung zur Herstellung einer desinfizierten, für Menschen ungefährlich trinkbaren Lösung:
zwei hermetisch voneinander getrennten Kammern (31, 32), wobei in der ersten Kammer (31) eine trockene, bei Auflösung in Wasser eine Rehydratisierungslösung bildende Elektrolytsalzmischung gelagert ist;
in der zweiten Kammer (32) eine hygroskopische, Natriumchlorit enthaltende Substanz, vorzugsweise in Tablettenform, gelagert ist; und
in einer getrennten Kammer ein hygroskopisches, in Wasser mit Natriumchlorit unter Bildung von Chlordioxid reaktionsfähiges Oxidationsmittel gelagert ist.

Dieser Mehrkammerbehälter stellt eine Einzeldosis für die orale Rehydrationstherapie bereit, d.h. die Zusammensetzung ist vorzugsweise so formuliert, dass sie die Herstellung beispielsweise einer 500 ml Einzeldosis-Flüssigkeit für die orale Rehydrationstherapie zur zeitweiligen Verwendung in der Rehydrationstherapie ermöglicht. Aufgrund der Formulierung können auch größere Volumina lagerungsstabil erzeugt werden.

## Beschreibung

Die vorliegende Erfindung betrifft ein Mehrkammerbehälter (10) zur Aufnahme, Lagerung und Bereitstellung von Komponenten einer festen oralen Rehydratisierungszusammensetzung zur Herstellung einer desinfizierten, für Menschen und/oder Säugetiere ungefährlich trinkbaren Lösung.

Dehydration ist ein Zustand, der auf krankheitsbedingten oder massiven körperlichen Aktivitäten, Blutungen, Hyperthermie, Schocksituationen beruht und den Verlust von Wasser und / oder Elektrolyten zur Folge hat. Laut WHO verursacht eine Elektrolystörung Hyperglykämie, akute Mangelernährung, akutes Erbrechen und Durchfall. Dehydration infolge von Fehlernährung, Krankheit und akutem Durchfall ist ein wesentlicher Faktor für die Sterblichkeit, insbesondere in Entwicklungsländern, und bis heute im Jahr 2019 die zweithäufigste Todesursache bei Kindern unter 6 Jahren. Schätzungen zufolge sterben jährlich mehr als 3 Millionen Menschen an den Folgen von akuten Durchfall. Weltweit sterben mehr als 2 Millionen Menschen an Darchfallerkrankungen, die durch Magen-Darm-Infektionen sowie auch durch Malaria und Masern verursacht werden.

Gastrointestinale Infektionen treten in Entwicklungsländern meist durch kontaminiertes Wasser auf. Wiederholte hintereinander auftretende Durchfälle wirken sich negativ auf die Gesundheit und den Stoffwechsel der Betroffenen aus. Durchfallpatienten können so geschwächt sein, dass sie für andere akute Infektionen und Krankheiten zusätzlich anfällig sind.

Durchfall wird typischerweise durch eine Vielzahl von viralen, bakteriellen und parasitären Organismen verursacht, die üblicherweise in kontaminiertem Wasser vorkommen, insbesondere in den Entwicklungsländern, Wissenschaftlich bekannt ist, dass Mikroorganismen, wie z.B. Shigellae, Salmonellae, V. cholera und Stämme von E. coli sowie Giardia laMehrkämmerbehälter 101ia und Entamoeba histolytica, insbesondere bei Kindern, akuten Durchfall verursachen,

Viren, die an Durchfall im Kindesalter beteiligt sind, können untern anderem Rotaviren, enterische Adenoviren, Cryptosporidium, Coronaviren, Norwalk-Viren, Cytomegaviren, Herpes-simplex-Viren und virale Hepatitis sein. Campylobacter jeujeni und Yersinia enterocolitica wurden auch bei Durchfallexkrementen nachgewiesen. Mehrheitlich der bei Kindern vorkommenden Durchfälle wird durch die Übertragung pathogener Bakterien und Viren und über den fäkal-oralen Weg verursacht. Durch Fäkalien in kontaminierten Nutzgewässern und Nahrungsmitteln, die durch mangelnde Hygiene entstehen oder durch als Überträger wirkende Insekten weitergegeben werden, kann die Durchfallerkrankung verursacht werden.

Das kontaminierte keimbelastete Wasser wird häufig aufgrund fehlender sanitärer Einrichtungen oder sicherer Trinkwasserversorgung oder bei der Bewässerung oder Zubereitung von Lebensmitteln direkt verbraucht. Dadurch steigt das Infektionsrisiko massiv. Ruhr und Cholera, auch in lebensbedrohlichen Verlaufsformen, sind häufige Folgen.

Wird bei der Dehydrationstherapie weiterhin schon kontaminiertes, verunreinigtes infektiöses Wasser eingesetzt, kommt es zu einer ständigen oder Kreislaufförmigen Reinfektion.

Die Behandlung und Vorsorge von durch Durchfall verursachter Dehydration stellt daher eine erhebliche weltgesundheitliche Herausforderung dar, insbesondere in Ländern des globalen Südens, in denen der Zugang zu sauberem Trinkwasser kaum vorhanden, eingeschränkt öder faktisch nicht vorhanden ist.

Aus der WO 2016/079265 ist eine feste Rehydratisierungszusammensetzung mit einem integrierten Desinfektionsmittel bekannt. Diese kann als Tablette mit wasserlöslichen Zwischenschichten bereitgestellt werden. In dieser Druckschrift wird vorgeschlagen, die Zusammensetzung so zu wählen, dass die Rehydratisierungslösung zeitlich erst nach der Desinfektion des Wassers hergestellt wird. Diese Zusammensetzung kann durch Wechselwirkung der Komponenten und Einflüsse der Umgebung unbrauchbar werden.

Daher besteht der Bedarf, eine Formulierung und Zusammensetzungen zur Herstellung oraler Rehydratisierungslösungen, instant, pH-Wert-unabhängig keimfreien unabhängig dem Grad der Vorverkeimung bereitzustellen, insbesondere in Situationen, in denen größere Mengen an Trinkwasser nicht verfügbar sind. Es besteht auch ein Bedarf die Komponenten zur Herstellung von oralen Rehydratisierungslösungen bereitzustellen, die auf eine unvorbereitete Weise verwendet werden können, ohne dass eine konstante Versorgung mit Trinkwasser erforderlich ist.

Diese Aufgabe wird gemäss der vorliegenden Erfindung wird durch einen Mehrkammerbehälter zur Aufnahme, Lagerung und Bereitstellung von Komponenten, einer festen oralen Rehydratisierungszusammensetzung zur Herstellung einer desinfizierten, für Menschen ungefährlich trinkbaren Lösung gelöst, umfassend:
a) ein Mehrkammersystem mit mindestens zwei hermetisch voneinander getrennten Kammern, wobei:
b) in der ersten Kammer eine trockene, bei Auflösung in Wasser eine Rehydratisierungslösung bildende Elektrolytsalzmischung gelagert ist;
c) in der zweiten Kammer eine hygroskopische, Natriumchlorit enthaltende Substanz, vorzugsweise in Tablettenform, gelagert ist; und
d) in einer von der ersten Kammer getrennten Kammer ein hygroskopisches, in Wasser mit Natriumchlorit unter Bildung von Chlordioxid reaktionsfähiges Oxidationsmittel gelagert ist.

Dieser Mehrkammerbehälter ermöglicht es, die einzelnen Komponenten während eines langen Zeitraums unabhängig von äusseren Einflüssen und von Einflüssen anderer Komponenten sicher zu lagern. Ausserdem ermöglicht es abgestimmte Dosierung nach einem kurzen Zeitintervall die Bereitstellung einer trinkbaren Lösung, selbst, wenn nur verunreinigtes Wasser zur Verfügung steht. Die beim Einbringen des Inhalts der zweiten Kammer in Wasser einsetzende Reaktion ist insbesondere bei einer Ausbildung als Tablette räumlich eng begrenzt. Das Auflösen des Inhalts der ersten Kammer bleibt damit weitgehend unbeseinflusst.

In einer vorteilhaften Ausgestaltung der Erfindung kann es vorgesehen sein, dass die Mengen der einzelnen Komponenten derart aufeinander abgestimmt sind, dass sie bei gleichzeitiger Eingabe in Wasser innerhalb des gleichen Zeitintervalls mit dem gleichen Volumen an Wasser sich weitgehend vollständig auflösen, wobei innerhalb dieses Zeitintervalls eine volumenspezifische Masse von 1 bis 20 mg, vorzugsweise von 2 bis 10 mg, Chlordioxid pro Liter des behandelten Wassers erzeugbar ist. Auf diese Weise kann eine für die Instantzubereitung geeignete Zusammensetzung bereitgestellt werden, die auch den hygienischen Anforderungen an die bereitgestellte Lösung sehr gut genügt.

Für die Komponenten kann ferner ein Flockungsmittel zur Behandlung kontaminierter Flüssigkeiten umfassen und zur Steigerung der Effizienz von Absetz-, Klär-, Dekantierungs-, Filtrations- und / oder Zentrifugationsvorgängen verwendet werden, Ein Flockungsmittel ist eine Substanz, die in Flüssigkeiten suspendierte feine Partikel zum Agglomerieren bringt. Die Agglomerate können dann durch Filtration entfernt werden, was mit den nicht agglomerierten feinen Teilchen nicht möglich wäre. Typische Flockungsmittel sind beispielsweise in der WO 2016/079265 A1 offenbart.

Darüber hinaus können zahlreiche natürlche Produkte als Flockungsmittel verwendet werden, unter anderem Chitosan, Isinglass, Moringa oleifera-Samen (Meerrettichbaum), Gelatine, Strychnos potatorum-Samen (Nirmali-Nussbaum), Guarkernmehl, Alginate (braune Algenextrakte), natürliche Stärken, anionisch oxidierte Stärken, aminbehandelte kationische Stärken, vorgelatinierte Stärke, Maisstärke, Kartoffelstärke. Vorzugswelse ist das Flockungsmittel Bentonit, Eisensulfat oder Guargummi, bevorzugter ist das Flockungsmittel Bentonit oder Eisensulfat.

Die Menge des verwendeten Flockungsmittels hängt vom Flockungsmittel ab. Wenn beispielsweise Eisensulfat verwendet wird, umfasst die Zusammensetzung vorzugsweise etwa 2 bis etwa 20 Gew%, vorzugsweise etwa 5 bis etwa 15 Gew%, noch bevorzugter etwa 5 bis etwa 10 Gew% Flockungsmittel.

Die Zusammensetzung kann ferner einen pharmazeutisch verträglichen Stabilisator enthalten. Geeignete pharmazeutisch verträgliche Stabilisatoren umfassen geeignete organische Säuren, die als Stabilisator verwendet werden können, wie z.B. Weinsäure, Zitronensäure, Acetamidoacrylsäure, Acetamidohexansäure, Acetylbuttersäure, Acrylsäure, Adipinsäure, Maleinsäure, Ethoxyessigsäure, Ameisensäure, Bernsteinsäure Säure, Buttersäure, Bernsteinsäure, Hexansäure, Hippursäure, Malonsäure, Methansulfonsäure, Milchsäure, Caprylsäure, Ölsäure, Oxalsäure, Salicylsäure und Valeriansäure, Tocopherolacetat.

Zusätzlich können alle oder nur ausgewählte Komponenten der Zusammensetzung durch Beschichten stabilisiert werden. In einer zusätzlichen Ausführungsform können alle oder nur ausgewählte Komponenten durch Komplexierung stabilisiert werden, beispielsweise durch Komplexierung in entweder Alpha-, Beta- oder Gamma-Cyclodextrinen.

Die oralen Rehydratisierungszusammensetzungen der vorliegenden Erfindung können eine oder mehrere orale Rehydratisierungskomponenten umfassen, nämlich Kohlenhydrate und / oder Elektrolyte.

In ihrer einfachsten Form können die oralen Rehydratisierungskomponenten der vorliegenden Zusammensetzung ein Kohlenhydrat wie einen Zucker (vorzugsweise Glukose) und Natriumchlorid, umfassen, Vorzugsweise umfassen die oralen Rehydratisierungskomponenten, Das Kohlenhydrat umfasst typischerweise mindestens einen Zucker, der vorzugsweise ausgewählt ist aus der Gruppe bestehend, aus: Glucose, Fructose, Saccharose oder Dextrose und Gemischen davon. Vorzugsweise umfasst die Kohlenhydratkomponente Glucose und / oder Saccharose und insbesondere Glucose.

Die Elektrolytkomponente umfasst vorzugsweise eines oder mehrere, der folgenden Elemente: Natrium, Kalium, Chlorid und Bicarbonat (d.h. eines oder mehrere der Ionen von Natrium, Kalium, Chlorid und Bicarbonat) und Mehrkammerbehälter 10inationen davon. In seiner einfachsten Form enthält der Elektrolyt Natriumchlorid. Andere Elektrolytkomponenten können enthalten sein. Beispielsweise kann der Elektrolyt weiterhin ein oder mehrere Calcium-, Magnesium- und Hydrogenphosphat (Bicarbonat) -Ionen, (d.h. ein oder mehrere Calcium-, Magnesium- und Hydrogenphosphat-Ionen) umfassen.

Vorteilhafterweise können weiterhin ein oder mehrerer Wirkstoffe zur Behandlung oder Linderung von Durchfall oder Durchfallsymptomen enthalten sein, vorzugsweise ausgewählt aus der Gruppe bestehend aus Probiotika (z. B. Saccharomyces boulardii), Präbiotika, Pelargonium sidoides-Extrakt, ein Antibiotikum, ein krampflösendes Mittel (wie Loperamid), ein Antiemetikum (wie Metoclopramid), Aktivkohle, Kaolin, Montmorillonit-Ton, Bentonit-Ton, Bismut, Subsalicylat, Crofelemer (Fulyzaq), ein Gl-Schutzmittel (zum Beispiel ein H2-Rezeptor-Antagonist wie Cimetidin und Ranitidin), ein Protonenpumpenhemmer wie Omeprezal, Esomeprazol und Pantoprozol).

Es können kann auch weitere Komponenten und / oder Hilfsstoffe enthalten sein. Weitere Komponenten können Wasserbehandlungsmittel wie Nahrungsergänzungsmittel wie Vitamin C (etwa 50 bis etwa 500 mg) oder andere vorzugsweise wasserlösliche Vitamine, eine Aminosäure, ein Dipeptid und / oder ein Oligopeptid oder ein Zinksalz, wie Zinksulfatmonohydrat, Zinkoitrat und Zinkoxid, sein.

Geeignete pharmazeutisch verträgliche Arzneimittelträger, die in den erfindungsgemäßen Zusammensetzungen enthalten sein können, können ein Puffermittel, ein Geschmacksmaskierungsmittel, einen Süßstoff, einen Geschmacksstoff, einen Farbstoff und/oder ein Konservierungsmittel umfassen.

Zweckmäßigerweise liegen die Komponenten in dem Mehrkammerbehälter in Form eines Pulvers, eines Granulats, einer Tablette oder einer Kapsel vor. Das Auflösen oder Dispergieren der Zusammensetzung kann durch den Einschluss einer Brausezusammensetzung zur Bildung einer Brausetablette oder eines Brausegranuläts unterstützt werden.

Weitere vorteilhafte Ausgestaltungen der vorliegenden Erfindung sind den übrigen Unteransprüchen, zu entnehmen.

Bevorzugte Ausführungsbeispiele werden nachfolgend näher mit Bezug auf die anhängende Zeichnung erläutert, die zeigen :
- Figur 1: einen Mehrkammerbehälter,
- Figur 2: den Mehrkammerbehälter gemäss Figur 1 in geöffneter Form; und
- Figur 3: einen Schnitt durch die Verbundmaterialfolie des in den Figuren 1 und 2 gezeigten Mehrkammerbehälters.

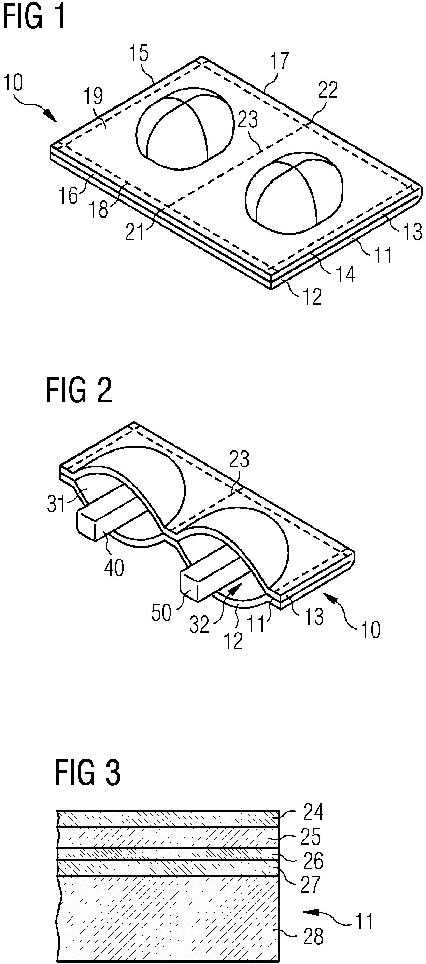

Die Figur 1 zeigt einen versiegelten Mehrkammerbehälter 10 in der Bauform eines Vierrand-Siegelbeutels. Dieser besteht beispielsweise aus einer gefalteten Folie 11 mit einer Unterfolie 12 und einer Oberfolie 13. Diese sind allseitig an den Rändern 14 bis 17 miteinander mittels Randsiegelnähten 18 versiegelt. Die Randsiegelnähte 18 sind gestrichelt dargestellt. Hierbei sind die Längsränder 14, 15 parallel zueinander ausgerichtet. Weiterhin hat der dargestellte Mehrkammerbehälter 10 zwei. Querränder 16, 17, die ebenfalls parallel zueinander orientiert sind. Anstatt aus einer gefalteten Folie 11 kann der Mehrkammerbehälter 10 auch aus einer ungefalteten Unterfolie 12 und einer mit dieser versiegelten ungefalteten Cberfolie 13 ausgebildet sein.

Der Mehrkammerbehälter 10 kann auch als Dreirand-Siegelbeutel, als Schlauchbeutel, etc. ausgebildet sein. Die z.B. gefaltete Folie 11 ist dann mittels z.B. zweier oder dreier Nähte versiegelt. Es ist auch denkbar, Mehrkammerbehälter 810 mit dreieckiger, runder, vieleckiger etc. Grundfläche auszubilden. Jeder dieser Mehrkammerbehälter 10 hat mindestens zwei voneinander beabstandete, den Mehrkammerbehälter 10 begrenzende Randbereiche 21, 22.

Die genannten, voneinander beabstandeten Randbereiche 21, 22 sind mittels einer Siegelnaht 23 verbunden, die im AB von den Rändern 14 bis 17 bestandet zumindest bereichsweise im. Innenbereich 19 des Mehrkammerbehälter 10 verläuft. Diese in den Figuren 1 und 2 gestrichelt dargestellte Siegelnaht 23 verbindet die Oberfolie 13 und die Unterfolie 12 in einem breiten Bereich. Hierbei wird eine Diffusion in Querrichtung zur Siegelnaht 23 verhindert. Damit trennt die Siegelnaht 23 zwei Kammern 31, 32 des Mehrkammerbehälters 10 hermetisch voneinander ab. Diese beiden Kammern 31, 32 können die gleiche Grösse haben oder unterschiedlich gross ausgestaltet sein. Es ist auch denkbar, den Mehrkammerbehälter 10 mit drei oder mehr Kammern auszubilden. Die einzelne, die Kammern 31, 32 voneinander abtrennende Siegelnaht 23 kann auch ringtörmig ausgebildet sein, sodass die Kammern 31, 32 beispielsweise koaxial zueinander angeordnet sind.

In der Figur 2 ist ein geöffneter Mehrkammerbehälter 10 dargestellt. Beispielsweise ist dieser in Querrichtung zur Siegelnaht 23 aufgeschnitten, sodass beide Kammern 31, 32 geöffnet sind. Es ist aber auch denkbar, den Mehrkammerbehälter 10 durch Aufreissen zu öffnen Hierfür kann der Mehrkammerbehälter 10 eine Aufreisshilfe haben. Dies ist beispielsweise eine Kerbe im Querrand 16, 17, eine weder die Öberfolie 13 noch die Unterfolie 12 durchdringende Lasernaht, etc. Bei Ausbildung einer Lasernaht beträgt die Tiefe dieser Naht bei Einsatz der Folie 11 des Ausführungsbeispiels maximal 66% der Dicke der Folie 11. Es ist auch denkbar, die Kammern 31, 32 einzeln zu öffnen.

In jeder der Kammern 31, 32 ist im Ausführungsbeispiel eine Tablette 40, 50 gelagert. Die in einer ersten Kammer 31 gelagerte erste Tablette 40 besteht aus einer trockenen Elektrolytsalzmischung. Beispielsweise ist die erste Tablette 40 mittels Pressen eines Granulats hergestellt. Anstatt als Tablette 40 kann der Inhalt der ersten Kammer 31 auch als Granulat, als Pulver, etc. ausgebildet sein. Der Inhalt der ersten Kammer 31 ist wasserlöslich. Er löst sich bei Zugabe von Wasser in eine Rehydratisierungslösung auf.

Das Auflösen der trockenen Elektrolytsalzmischung in Wasser erfolgt abhängig von ihrer geometrischen Gestalt. Bei einem Pulver oder einem Granulat bildet sich unmittelbar nach der Eingabe eine sich im Wasser ausbreitende Wolke. Beim Einsatz einer Tablette 40 erfolgt das Auflösen von den Rändern der Tablette 40 her. Die erzeugte Lösung verteilt sich im Wasser. Hierbei erfolgt keine oder nur eine geringe chemische Reaktion der Elektrolytsalzmischung mit dem Wasser.

Die in der zweiten Kammer 32 gelagerte zweite Tablette 50 enthält im Ausfuhrungabeispiel Natriumchlorit und ein Oxidationsmittel. Diese zweite Tablette 50 kann quaderförmig, würfelförmig, kugelförmig, etc. ausgebildet sein. Das Verhältnis der Gesamtoberfläche der Tablette zu ihrer Gesamtmasse ist kleiner als das Verhältnis der Gesamtoberfläche eines Granulats oder Pulvers zu dieser Gesamtmasse.

Die zweite Tablette 50 ist beispielsweise durch Pressen eines Granulatgemenges des Natriumchlorits und des Oxidationsmittels hergestellt. Diese beiden Bestandteile können auch in getrennten Kammern 32 gelagert sein, wobei das Oxidationsmittel jedoch in einer vor der Elektrolytsalzmischung abgetrennten Kammer gelagert ist. Das Oxidationsmittel ist eine Säure im trockenen Aggregatzustand, die ein Natriumchlorit unter Vermeidung toxischer Nebenprodukte zu Chlordioxid oxidiert. Bespiele derartiger Säuren sind Natriumperoxidsulfat, Natriumhydrogensulfat, Zitronensäure, etc. Beide in der Tablette 50 enthaltenen Bestandteile sind unter dem Einfluss von Luftfeuchtigkeit auflösbar.

Der Aufbau der zweiten Tablette 50 ist derart gewählt, dass die Tablette 50 sich in einem vorgebbaren Volumen, z.B. 500 ml oder einem Liter Wasser, innerhalb eines vorgegebenen Zeitintervalls, z.B. 5 Minuten oder 20 Minuten, auflöst. Beim Auflösen in Wasser reagiert das Natriumchlorit mit dem Oxidationsmittel. Hierbei wird Chlordioxid erzeugt und freigesetzt. Die Reaktion des Natriumchlorits und des Oxidationsmittels erfolgt nur an den momentanen Rändern der Tablette 50. Die geometrische Form der zweiten Tablette 50 ermöglicht damit einen eng begrenzten Reaktionsraum im Wasser. Dieser Reaktionsraum ist beispielsweise ein Bereich mit einer Dicke von 5 mm um die zweite Tablette 50 herum. Die zweite Tablette 50 hat somit eine geringere. Reaktionsoberfläche als ein Granulat oder ein Pulver bei gleicher Gesamtmasse.

Der betrachtete Temperaturbereich des Wassers liegt beispielsweise zwischen 10 und 40°C. In diesem Temperaturbereich verhalten sich die Rehydratisierungslösung und das Desinfektionsmittel (Natriumchlorit als Ausgangssubstanz) beispielsweise analog zueinander.

Der Natriumchlorit-Anteil in der zweiten Tabletts 50 ist so bemessen, dass bei aufgelöster Tablette eine volumenspezifische Masse von 2 bis 10 mg Chlordioxid pro Liter des behandelten Wassers erzeugt worden ist. Beispielsweise ist die erforderliche Menge der Ausgangsstoffe der zweiten Tablette 50 für ihre stöchiometrische Reaktion in Wasser abhängig vom mathematischen Quotienten aus dem Volumen des zu behandelnden Wassers und des gewählten Zeitintervalls. Dieser Quotient ist - z.B. bei konstanter Temperatur - konstant.

Die Menge der Elektrolytsalzmischung in der ersten Kammer 31 ist auf dasselbe Volumen des Wassers auf dasselbe Zeitintervall angepasst. Bei gleichzeitiger Eingabe der Inhalte der Kammern 31, 32 in das zu behandelnde Wasser laufen die beiden Lösungsvorgänge parallel zueinander ab. Aufgrund der räumlich eng begrenzten chemischen Reaktion beim Auflösen der zweiten Tablette 50 wird das Auflösen des Inhalts der ersten Kammer 31 nicht oder nur geringfügig beeinflusst. Gegebenenfalls kann das Auflösen des Inhalts der zweiten Kammer 32 den Lösungsvorgang des Inhalts der ersten Kammer 31 unterstützen und/oder beschleunigen.

Figur 3 zeigt den Aufbau einer Folie 11. Die Folie 11 ist eine Verbundmaterialfolie 11. Sie besteht im Ausführungsbeispiel aus fünf übereinanderliegenden Schichten 24 bis 28 unterschiedlicher Merkstoffe und unterschiedlicher Dicke. Die Verbundmaterialfolie 11 hat im Ausführungsbeispiel eine Gesamtdicke zwischen 130 und 160 Mikrometern. Ihre flächenspezifische Masse beträgt zwischen 150 und 180 g/m².

Die kammerseitige Schicht 24 besteht im Ausführungsbeispiel aus einer gereckten Polyamidfolie. Die Polyamidfolie kann einachsig oder zweiachsig gereckt sein. Diese weitgehend undurchlässige kammerseitige Schicht 24 hat im Ausführungsbeispiel eine Dicke zwischen 9 und 12% der Gesamtdicke der Verbundmaterialfolie 11.

Mit der kammerseitigen Schicht 24 ist eine zweite Schicht 25 verbunden. Dies ist im Ausführungsbeispiel eine Polyethylenschicht, deren Dicke z.B. zwischen 12 und 16% der Gesamtdicke der Verbundmaterialfolie 11 beträgt.

Auf der zweiten Schicht 25 liegt als Zwischenschicht 26 eine Aluminiumschicht auf. Ihre Dicke beträgt zwischen 7 und 10% der Gesamtdicke der Verbundmaterialfolie 11. Die Dicke dieser Zwischenschicht 26 beträgt im Ausführungsbeispiel 80% der Dicke der kammerseitigen Schicht 24.

Auf der Zwischenschicht 26 liegt eine vierte Schicht 27 auf. Diese ist im Ausführungsbeispiel identisch zur kammerseitigen Schicht 24 ausgebildet.

Die Aussenschicht 28 der verbundmaterialfolie 11 besteht aus Polyethylen. Diese Aussenschicht 28 hat beispielsweise die vierfache Dicke der zweiten Schicht 25.

Die Verbundmaterialfolie 11 kann auch aus drei, viert oder auf mehr als fünf Schichten 14 bis 28 bestehen. In allen diesen Ausführungsbeispielen ist die Zwischenschicht 26 sowohl kammerseitig als auch zur Aussenseite hin mit mindestens einer weiteren Folienschicht 24, 25, 27, 28 verbunden.

Um aus stehendem oder fliessendem Wasser eine trinkbare Lösung vorzubereiten, wir ein vorgegebenes Volumen des Wasser, z.B. 500 ml oder ein Liter, in ein Gefäss gefüllt. Der Mehrkammerbehälter 10 wird z.B. so aufgerissen, dass beide Kammern 31, 32 geöffnet warden. Der gesamte Inhalt der Kammern 31, 32 wird gleichzeitig in das mit Wasser gefüllte Gefäss gegeben. Nach Ablauf des vorgegebenen Zeitintervalls kann das aufbereitete Wasser genutzt werden (getrunken werden).

Es ist auch denkbar, die vorgeschlagenen Ausführungsbeispiele miteinander zu kombinieren,

### Bezugszeichenliste

- 10: Behälter, Mehrkammerbehälter
- 11: Folie, Verbundmaterialfolie
- 12: Unterfolie
- 13: Oberfolie
- 14, 15: Längsrand
- 16, 17: Querrand
- 18: Randsiegelnähte
- 19: Innenbereich

- 21, 22: Randbereich.
- 23: Siegelnaht
- 24: kammerseitige Schicht, Folienschicht
- 25: zweite Schicht
- 26: Zwischenschicht, Aluminiumschicht
- 27: vierte Schicht, Folienschicht
- 28: Aussenschicht, Folienschicht

- 31: Kammer, erste Kammer
- 32: Kammer, zweite Kammer

- 40: Tablette, erste Tablette
- 50: Tablette zweite Tablette

## Patentansprüche

1. Mehrkammerbehälter (10) zur Aufnahme, Lagerung und Bereitstellung von Komponenten einer festen oralen Rehydratisierungszusammensetzung zur Herstellung einer desinfizierten, für Menschen ungefährlich trinkbaren Lösung, umfassend:
a) ein Mehrkammersystem mit mindestens zwei hermetisch voneinander getrennten Kammern (31, 32), wobei:
b) in der ersten Kammer (31) eine trockene, bei Auflösung in Wasser eine Rehydratisierungslösung bildende Elektrolytsalzmischung gelagert ist;
c) in der zweiten Kammer (32) eine hygroskopische, Natriumchlorit enthaltende Substanz, vorzugsweise in Tablettenform, gelagert ist; und
d) in einer von der ersten Kammer (31) getrennten Kammer ein hygroskopisches, in Wasser mit Natriumchlorit unter Bildung von Chlordioxid reaktionsfähiges Oxidationsmittel gelagert ist.

2. Mehrkammerbehälter (10) nach Anspruch 1,
**dadurch gekennzeichnet, dass**
die Mengen der einzelnen Komponenten derart aufeinander abgestimmt sind, dass sie bei gleichzeitiger Eingabe in Wasser innerhalb des gleichen Zeitintervalls mit dem gleichen Volumen an Wasser sich weitgehend vollständig auflösen, wobei innerhalb dieses Zeitintervalls eine volumenspezifische Masse von 1 bis 20 mg, vorzugsweise von 2 bis 10 mg, Chlordioxid pro Liter des behandelten Wassers erzeugbar ist.

3. Mehrkammerbehälter (10) nach Anspruch 1 oder 2,
**dadurch gekennzeichnet, dass**
die in der zweiten Kammer (32) gelagerte Substanz die gesamte Menge des Natriumchlorits und des Oxidationsmittels umfasst.

4. Mehrkammerbehälter (10) nach einem der Ansprüche 1 bis 3,
**dadurch gekennzeichnet, dass**
in einer der beiden Kammern. (31, 32) ein Flockungsmittel und/oder ein oder mehrere pharmazeutisch verträgliche Hilfsstoffe gelagert sind.

5. Mehrkammerbehälter (10) nach Anspruch 4,
**dadurch gekennzeichnet, dass**
als Flockungsmittel verwendet werden kann:
a) mineralische Flockungsmittel, z. B. aktivierte Kieselsäure, kolloidale Tone (beispielsweise hydratisiertes Aluminiumsilikat (Bentonit PhEur 6.4), kolloidale Kieselsäure, Metallhydroxide;
b) natürliche Flockungsmittel, beispielsweise Stärkederivate, Polysaccharide, Alginate;
c) synthetische Flockungsmittel, beispielsweise Polyacrylamide (beispielsweise Polyethylene, Polyamine, sulfonierte Verbindungen); und/oder.
d) Alaun, Aluminiumchlorhydrat, Aluminiumsulfat, Calciumoxid, Calciumhydroxid, Natriumhydroxid, Eisen (II) sulfat (Eisen (II) sulfat), Eisen (III) chlorid (Eisen (III) chlorid), Polyacrylamid, Polydiallyldimethylammonium Chlorid (PolyDADMAC), Natriumaluminat, Natriumsilikat oder natürliche Produkte als Flockungsmittel wie Chitosan, Isinglass, Moringa Oleifera-Samen (Meerrettichbaum), Gelatine, Strychnos potatorum-Samen (Nirmali-Nussbaum), Guarkernmehl, Alginate (braune Algenextrakte), natürliche Stärken, anionisch oxidierte Stärken, aminbehandelte kationische Stärken, vorgelatinierte Stärke, Maisstärke, Kartoffelstärke; vorzugsweise ist das Flockungsmittel Bentonit, Eisensulfat oder Guargummi.

6. Mehrkammerbehälter (10) nach einem der vorangehenden Ansprüche, **dadurch gekennzeichnet, dass**
das Oxidationsmittel Nätriumperoxidsulfat, Natriumhydrogensulfat und/oder Zitronensäure ist.

7. Mehrkammerbehälter (10) nach einem der vorangehenden Ansprüche, **dadurch gekennzeichnet, dass**
die trockene Elektrolytsalzmischung als Tablette (40) ausgebildet ist.

8. Mehrkammerbehälter (10) nach einem der vorangehenden Ansprüche, **dadurch gekennzeichnet, dass**
er als Siegelbeutel mit mindestens eine, zwei Randbereiche (21, 22) innerhalb des Mehrkammerbehälters (10) verbindende, die Kammern (31, 32) voreinander abtrennenden Siegelnaht (23) ausgebildet ist.

9. Mehrkammerbehälter (10) nach einem der vorangehenden Ansprüche, **dadurch gekennzeichnet, dass**
er aus mindestens einer Verbundmaterialfolie (11) mit mindestens drei Schichten (24 bis 28) besteht, wobei eine Zwischenschicht (26) eine Aluminiumschicht (26) ist, deren Dicke zwischen 5 und 20%, vorzugsweise zwischen 7 und 10%, der Gesamtdicke der Veroundmaterialfolie (11) beträgt.

10. Mehrkammerbehälter (10) nach einem der vorangehenden Ansprüche, **dadurch gekennzeichnet, dass**
die Verbundmaterialfolie (11) fünfschichtig aufgebaut ist und eine Dicke von 80 bis 250 Mikrometer, vorzugsweise von 120 bis 160 Mikrometer, aufweist, wobei die die Kammern (31, 32) begrenzende kammerseitige Schicht (24) aus gerecktem Polyamid besteht, wobei die Dicke der kammerseitigen Schicht (24) zwischen 5 und 20%, vorzugsweise zwischen 9 und 12%, der Gesamtdicke der Verbundmaterialfolie (11) beträgt.

11. Mehrkammerbehälter (10) nach einem der vorangehenden Ansprüche, **dadurch gekennzeichnet, dass**
in einer der beiden Kammern. (31, 32) als Kohlehydrat einer oder mehrere Zucker, wie z. B. Glucose, Fructors, Sucrose, Dextrose, umfasst sind, wobei vorzugsweise das Kohlenhydrat einen Anteil von 10 bis 90 Gew%, vorzugsweise von 35 bis 85 Gew%, bezogen auf das Gesamtgewicht der Komponenten, aufweist.

12. Mehrkammerbehälter (10) nach einem der vorangehenden Ansprüche, **dadurch gekennzeichnet, dass**
die trocken. Elektrolytsalzmischung eines oder mehrere von Natrium, Kalium, Chloride, Bicarbonate, Kalzium, Magnesium und Hydrogenphosphat umfasst.

13. Mehrkammerbehälter (10) nach Anspruch 12, **dadurch gekennzeichnet, dass**
der Elektrolyt einen Anteil von 10 bis 90 Gew%, vorzugsweise von 15 bis 65 Gew%, bezogen auf das Gesamtgewicht der Komponenten, aufweist.

14. Mehrkammerbehälter (10) nach einem der vorangehenden Ansprüche, **dadurch gekennzeichnet, dass**
in einer der beiden Kammern (31, 32) oder in einer weiteren Kammer ein oder mehrere Wirkstoffe zur Behandlung oder Linderung von Durchfall oder Durchfall Symptomen umfasst ist, vorzugsweise ausgewählt: aus der Gruppe bestehend aus Probiotika (z. B. Saccharomyces boulardii), Präbiotika, Pelargonium sidoides-Extrakt, ein Antibiotikum, ein krampflösendes Mittel (wie Loperamid), ein Antiemetikum (wie Metoclopramid), Aktivkohle, Kaolin, Montmorillonit-Ton, Bentonit-Ton, Bismut, Subsalicylat, Crofolemer (Fulyzaq), ein Gl-Schutzmittel (zum Beispiel ein H2-Rezeptor-Antagonist wie Cimetidin und Ranitidin), ein Protonenpumpenhemmer wie Omeprazol, Esomeprazol und Pantoprazol.

15. Mehrkammerbehälter (10) nach einem der vorangehenden Ansprüche, **dadurch gekennzeichnet, dass**
für die Komponenten eine Konsistenz in Form eines Pulvers, eines Granulats, einer Tablette (40, 50) oder einer Kapsel, vorzugsweise in deren schäumender Form, vorgesehen, ist.

16. Mehrkammerbehälter (10) nach einem der vorangehenden Ansprüche, **dadurch gekennzeichnet, dass**
in einer der beiden Kammern (31, 32) oder in einer weiteren Kammer Nahrungsergänzungsmittel und/oder sonstige Hilfsstoffe umfasst sind, wie beispielsweise Vitamin C (etwa 50 bis etwa 500 mg) oder andere vorzugsweise wasserlösliche Vitamine, eine Aminosäure, ein Dipeptid und/oder ein Oligopeptid oder ein Zinksalz, wie Zinksulfatmonohydrat, Zinkcitrat und Zinkoxid, ein Puffermittel, ein Geschmacksmaskierungsmittel, ein Süßstoff, ein Geschmacksstoff, ein Farbstoff und/oder ein Konservierungsmittel.
